# EUROPEAN PATENT APPLICATION

(11) **EP 1 974 783 A1**
(43) Date of publication of application: **01.10.2008**
(21) Application number: 07104697.3
(22) Date of filing: 22.03.2007
(51) Int. Cl.: B01D 9/00, C22B 7/00, C22B 34/34

(54) **Treatment of molybdate containing waste streams**

(71) Applicant: Holding AVR-Bedrijven B.V., 3195 ND Rotterdam (NL)
(72) Inventor: Witkamp, Geert-Jan, 2661 RJ Bergschenhoek (NL); van Spronsen, Johannes, 2201 VW Noordwijk (NL); Hasselaar, Melis, 2984 XG Ridderkerk (NL)
(74) Representative: van Loon, C.J.J.

(57) **Abstract**

The invention is directed to a process for the treatment of an aqueous solution comprising sodium carbonate and/or sodium bicarbonate and sodium molybdate, said process comprising freeze crystallising the solution at the eutectic freezing point thereof and recovering substantially pure ice crystals, substantially pure sodium carbonate and/or sodium bicarbonate and an aqueous product solution containing dissolved sodium molybdate.

## Description

The present invention is in the area of the treatment of molybdate containing waste streams, on the one hand to recover the molybdate from the said waste streams for further use and on the other hand to produce an effluent that is sufficiently clean to be discharged into surface water.

In various processes effluent or waste streams are produced containing molybdenum salts. Examples are the molybdenum catalysed oxidation processes. An example is the styrene monomer/propylene-oxide production.

Especially when the (usually caustic) effluent or waste stream contains both organic and inorganic components, a suitable solution is to burn the waste stream. The flue gases are washed with water resulting in an aqueous solution containing dissolved molybdate salts and dissolved sodium carbonate and/or sodium bicarbonate. In order to recover the molybdate, which is a valuable component for the metal (steel) industry, presently the solution is acidified with an acid, e.g. sulphuric acid. Following which molybdate salt is recovered by ion exchange and the resulting salt ( such as sulphate) is discharged. Disadvantages of this process are the high costs, due to the combined acidification and the ion exchange of the total flow. Further, the discharge of the final salt solution into the surface water is not always possible. In addition, it might be economically advantageous if the sodium carbonate and/or sodium bicarbonate could be recovered too.

It is an object of the invention to provide an improved process, wherein on the one hand sodium carbonate and/or sodium bicarbonate is recovered and on the other hand the molybdate is produced as an aqueous solution having an increased concentration thereby enabling a much easier and more economical recovery thereof.

One of the problems of separating the various components of the waste stream resides in the crystallisation behaviour of the salts. A substantial fraction of the sodium molybdate would be expected to be included in sodium carbonate and/or sodium bicarbonate when a combined solution thereof is subjected to crystallisation. This would rule out any crystallisation method, as the presence of molybdenum in sodium carbonate and/or sodium bicarbonate would make it impossible for further use or sale.

Surprisingly, it has now been found, that in eutectic freeze crystallisation of an aqueous solution comprising sodium carbonate and/or sodium bicarbonate and sodium molybdate can result in a substantially pure sodium carbonate and/or sodium bicarbonate, and in a solution of sodium molybdate, having an increased concentration of sodium molybdate compared to the initial solution, thereby making it much more economical to recover the molybdate there from. Additionally, also substantially pure ice crystals are obtained.

Accordingly the present invention is directed to a process for the treatment of an aqueous solution comprising sodium carbonate and/or sodium bicarbonate and sodium molybdate, said process comprising freeze crystallising the solution at the eutectic freezing point thereof and recovering substantially pure ice crystals, substantially pure sodium carbonate and/or sodium bicarbonate and an aqueous product solution containing dissolved sodium molybdate.

If needed, the said aqueous product solution containing dissolved sodium molybdate is further treated to provide the molybdate in a form suitable for further use. Examples of such further treatment are crystallisation, reverse osmosis, ion exchange and the like. In case high purity of the molybdate is required, ion exchange can be used. As the volume of the solution is much less, the use of ion exchange is suitable at this stage, although it can be too expensive when applied to the whole of the solution to be treated.

The invention is based on the use of eutectic freeze crystallisation, which is a process based on separation of components at a eutectic freezing point. Eutectic freeze crystallisation has been described in EP-A 1,230,194 and in Chem.Eng.Proc. 37, (1998), pp 207-213.

In freeze crystallisation at a eutectic freezing point (Eutectic freeze crystallisation; EFC) on the one hand crystalline material is obtained, and on the other hand ice crystals. It has surprisingly been found that in this process, sodium carbonate and/or sodium bicarbonate crystallises, whereas the molybdate will remain in the liquor and will build up in a recycle stream, from which a bleed is used as molybdate product stream.

In the context of the present invention sodium carbonate and/or sodium bicarbonate crystals are recovered. The product can either be pure sodium carbonate or pure sodium bicarbonate, or a mixture of both. In this respect pure or substantially pure refers to amounts of molybdate and other contaminants, that are below 200 ppm (mg/kg), preferably less than 20 ppm and most preferred less than 2 ppm.

As has been described in the cited references, EFC is based on the principle that a solution of a salt in water exhibits a eutectic freezing point. In the phase diagram water-salt, it can be seen that in case an undersaturated water salt mixture is cooled down to the freezing point thereof, ice crystals form first. This increases the salt concentration in the solution and decreases the temperature along the freezing point depression line, until the solution is saturated. At this composition the eutectic freezing point is reached. Further heat withdrawal results in simultaneous formation of both ice crystals and crystals of salt. In case the solution becomes (or is) saturated, first the salt will crystallise and the temperature will decrease along the solubility line, until an eutectic freezing point is reached. Then simultaneous formation of both ice crystals and crystals of salt occurs again at or near the eutectic point of the specific combination of compounds. In continuous operation, the operation point will therefore lie close to the eutectic point, irrespective of the feed composition.

Due to the difference in density and/or particle size, the crystals of salt and the ice can be recovered separately.

As indicated above, an important application of this process is in the treatment of waste streams originating from burning of waste streams originating from oxidation processes using a molybdenum based catalyst. An example is the styrene monomer/propylene oxide production using a molybdenum based catalyst. In such a process the amount of sodium molybdate (calculated as molybdenum) in the said aqueous solution comprising sodium carbonate and/or sodium bicarbonate and sodium molybdate is between 2 and 20,000 ppm and in the said aqueous product solution containing dissolved sodium molybdate between 4 and 50,000 ppm, but at least twice as high as in the said aqueous solution comprising sodium carbonate and/or sodium bicarbonate and sodium molybdate.

The process can be carried out at atmospheric pressure, or decreased or increased pressure. Generally atmospheric pressure is preferred, in view of ease of construction. It may, however, be advantageous to use increased pressure.

The cooling for the freeze crystallisation is done by conventional equipment, using the most economic energy source available at the location where the equipment is. This may be electricity or a turbine driven cooling system, or other sources of cold, for instance on-site available liquid nitrogen, ammonia or CO₂ or Liquefied Natural Gas (LNG).

According to a preferred embodiment, the EFC step is preceded by an upstream preconcentration step, such as reverse osmosis, evaporative crystallisation and/or ultra-filtration.

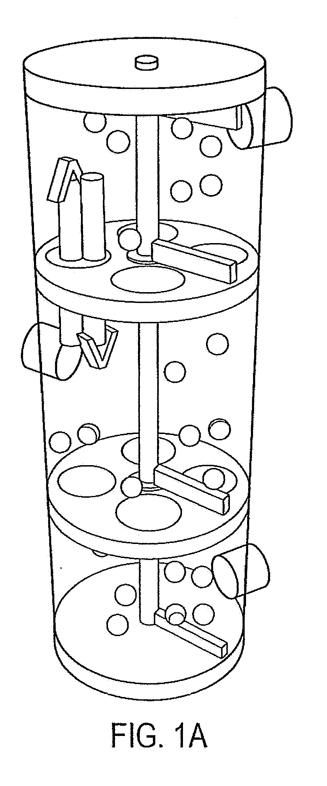

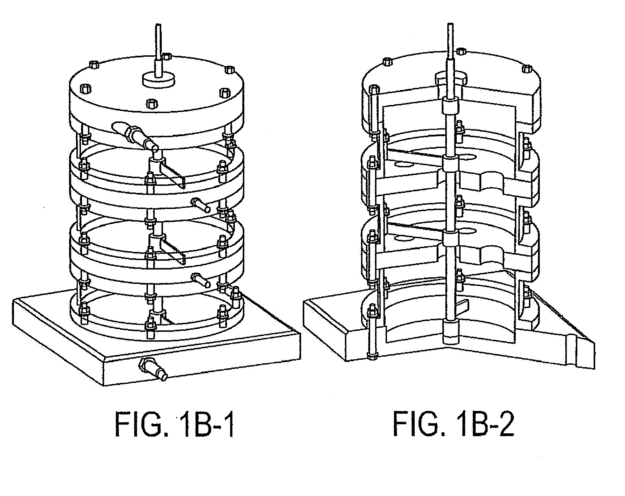

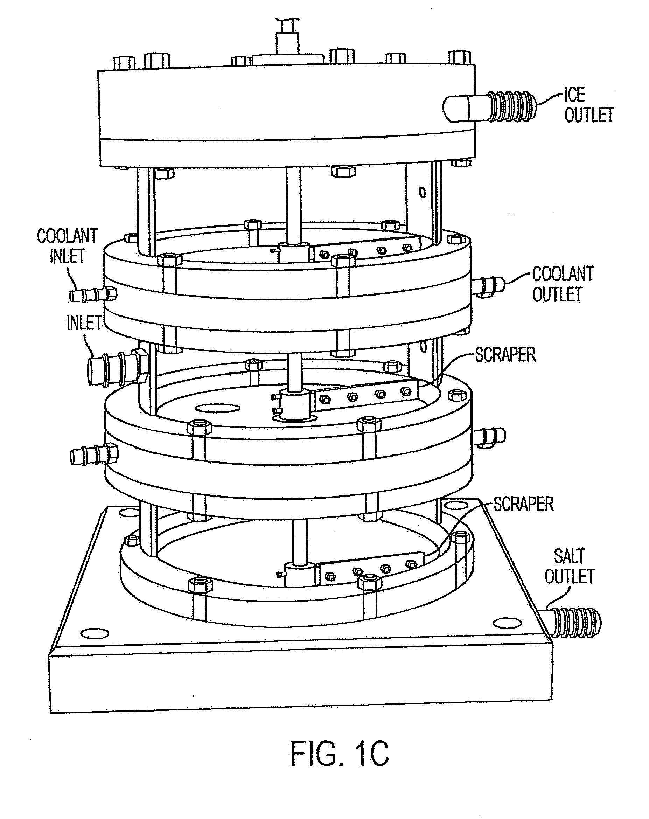

EFC can suitably be performed using well known crystallisation units, such as a forced circulation crystalliser, a draft tube baffled crystalliser, a GMF^{™} cooled disk crystalliser, a cooling disk column crystalliser (CDCC), such as depicted in Figures 1^{a,b,c}. or a scraped cooled wall crystalliser (SCWC).

Figures 1^{a} and 1^{b-1} and 1^{b-2} show schematic representations of the CDCC. Cooling is provided by means of disks which are wiped to prevent scaling and to improve heat transfer. The advantage of this type of design is its scale-up potential: the area available for cooling scales up in a 1:1 ratio with increasing volume of the crystalliser (provided the distance between cooling disks is kept equal). The feed streams enter the crystalliser at the centre of the column. Inside the column, ice and salt crystals form and, due to their density difference with the liquid, respectively move up to the top and down to the bottom of the column. Liquid as well as solids can move freely through the column because the cooling disks have orifices enabling the transport. Figure 1^{c} gives a schematic representations of the crystalliser.

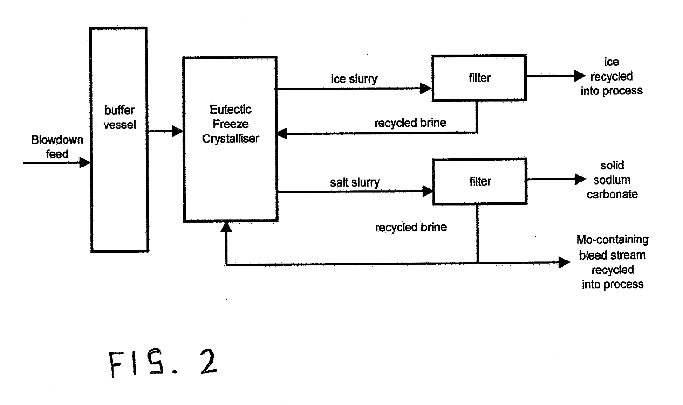

In the figure 2 a flow sheet is given of one embodiment of the process of the invention. In this figure a blowdown feed containing sodium carbonate and/or sodium bicarbonate, further containing small amounts of sodium molybdate, is fed to a eutectic freeze crystalliser, via a buffer vessel. The crystalliser is cooled to freezing point. A slurry of ice crystals and a slurry of salt crystals (sodium carbonate and/or sodium bicarbonate) is taken from the crystalliser. Both slurries are filtered and the brine (mother liquor) is recycled to the crystalliser. The substantially pure ice can be recycled into the process or used for other purposes. Part of the brine from the salt slurry is recycled to the crystalliser and part is removed as molybdate containing solution for further treatment and/or recovery of the molybdate.

The invention is now elucidated on the basis of the following, nonlimiting example.

### EXAMPLE

A scraped cooled wall crystalliser (eutectic freeze crystalliser) with a content of about 100 L is prefilled with a solution containing 2.7 wt % sodium, 0.7% sulfate, 500 mg/kg molybdate (calculated as molybdenum), various trace impurities, 1.9 wt% carbonate, 2.4 wt% bicarbonate. This solution was cooled to the point where ice was produced. The ice was filtered, while the filtrate (mother liquor) was fed back to the crystalliser and introduced together with fresh feed liquor. At a certain point of time when enough ice was formed and removed from the crystalliser, sodium carbonate started to form. The salt was continuously removed from the solution by filtration, where the filtrate was fed back to the crystalliser. When the operating temperature was -3.8 degrees centigrade the salt produced was sampled. The crystals were washed various times (one to nine times) with saturated pure sodium carbonate solution. The molybdate content in the crystals was less then 1 mg/kg.

From the recycle of the mother liquor a part was removed as molybdate containing product stream. The molybdate content therein was 1000 ppm.

## Claims

1. Process for the treatment of an aqueous solution comprising sodium carbonate and/or sodium bicarbonate and sodium molybdate, said process comprising freeze crystallising the solution at the eutectic freezing point thereof and recovering substantially pure ice crystals, substantially pure sodium carbonate and/or sodium bicarbonate and an aqueous product solution containing dissolved sodium molybdate.

2. Process according to claim 1, wherein the said aqueous product solution containing dissolved sodium molybdate is treated with at least one ion exchange resin to recover sodium molybdate.

3. Process according to claim 1 or 2, wherein the said aqueous solution comprising sodium carbonate and/or sodium bicarbonate and sodium molybdate is concentrated prior to freeze crystallising.

4. Process according to claim 1-3, wherein the amount of sodium molybdate (calculated as molybdenum) in the said aqueous solution comprising sodium carbonate and/or sodium bicarbonate and sodium molybdate is between 2 and 20,000 ppm and in the said aqueous product solution containing dissolved sodium molybdate between 4 and 50,000 ppm, but at least twice as high as in the said aqueous solution comprising sodium carbonate and/or sodium bicarbonate and sodium molybdate.

5. Process according to claim 1-4, wherein the said aqueous solution comprising sodium carbonate and/or sodium bicarbonate and sodium molybdate originates from the treatment of waste streams from molybdenum catalysed processes or liquid waste streams.

6. Process according to claim 5, wherein said aqueous solution comprising sodium carbonate and/or sodium bicarbonate and sodium molybdate originates from the treatment of waste streams from propylene oxide/styrene monomer production.

7. Process according to claim 2, wherein the sodium molybdate is recovered in a form suitable for use in the steel industry.
